# EUROPEAN PATENT APPLICATION

(11) **EP 4 807 957 A1**
(43) Date of publication of application: **16.09.2026**
(21) Application number: 25163429.1
(22) Date of filing: 13.03.2025
(51) Int. Cl.: H02M 1/00, H02M 3/00, H02M 3/335

(54) **A POWER CONVERTER**

(71) Applicant: Infineon Technologies Austria AG, 9500 Villach (AT)
(72) Inventor: IOB, Federico, 33100 Udine (IT); RIZZOLATTI, Roberto, 9523 Villach (AT); SAGGINI, Stefano, 33100 Udine (IT); URSINO, Mario, 9500 Villach (AT); DEBOY, Gerald Josef, 9061 Klagenfurt (AT)
(74) Representative: Elkington and Fife LLP

(57) **Abstract**

The disclosed concepts relate to a power converter comprising a plurality of converter paths. Each converter path comprises an input node, an output node, a first winding, and a second winding. The first winding is connected in series between the input node and the second winding, and the second winding is connected in series between the first winding and the output node. Each converter path is configured to conduct current in a same direction between the input node and the output node. Further, each first winding of the converter paths is inductively coupled to a second winding of a different converter path to form a respective transformer.

## Description

### TECHNICAL FIELD

The present disclosure generally relates to a power converter, and methods for operating the power converter.

### BACKGROUND

Power converters that convert a 48V to a digital load voltage are typically based on a two-stage approach. A two-stage approach exploits the benefit of high step-down capability and high-power density of an unregulated Intermediate Bus Converter (IBC), while a second stage, which is typically designed with a buck converter, enables regulation at digital load level. To meet footprint requirements, high switching frequency operation is needed both in the first and second stages. However, high frequency operation leads to higher losses.

Moreover, various digital loads (e.g. microprocessors, accelerators, ASICs) have high current demands and strenuous transient requirements. In some cases, currents of up to 1000A at voltages of around 0.75V are required. At these levels, parasitic components may deteriorate dynamic performance of the converter rapidly, while also impairing the power conversion efficiency due to distribution losses.

There is hence a need to provide a power converter, particularly for powering modern processors, with high power density and good transient performance.

### SUMMARY

According to one aspect, there is provided a power converter.

The power converter comprises: a plurality of converter paths, each converter path comprising an input node, an output node, a first winding, and a second winding. The first winding is connected in series between the input node and the second winding, and the second winding is connected in series between the first winding and the output node. Each converter path is configured to conduct current in a same direction between the input node and the output node. Each first winding of the converter paths is inductively coupled to a second winding of a different converter path to form a respective transformer.

According to another aspect of the present disclosure, there is provided a method for operating the matrix converter described above.

The method comprises generating a plurality of phase inputs using an input voltage, providing each phase input to different respective input nodes of the converter paths, and receiving an output voltage from the output nodes.

According to a further aspect of the present disclosure, there is provided another power converter.

The power converter comprises 1st to Nth converter paths, each converter path comprising an input node, an output node, a primary winding, and a secondary winding, the primary and secondary windings forming a series circuit. Each converter path comprises a power stage configured to provide power to the input node. N is an integer greater than 2, The primary winding of the Kth converter path is coupled to the secondary winding of the (K-1)th converter path and the secondary winding of the Kth converter path is coupled to the primary winding of the (K+1)th converter path, wherein K is an integer greater than 1 and less than N.

Those skilled in the art will recognize additional features and advantages upon reading the following detailed description, and upon viewing the accompanying drawings.

### BRIEF DESCRIPTION OF THE DRAWINGS

The invention will now be described by way of example with reference to the accompanying drawings, in which:
FIG. 1 presents a circuit diagram of a trans-inductor voltage regulator (TLVR);
FIG. 2 presents a circuit diagram of a power converter according to an embodiment;
FIG. 3 presents a circuit diagram of a power converter including a plurality of switching networks, according to another embodiment;
FIG. 4 presents a circuit diagram of a power converter including a plurality of switching networks comprising buck converters, according to a further embodiment;
FIG. 5 presents a circuit diagram of a power converter including an injection circuit connected to an input node of one of the converter paths, according to additional further embodiments;
FIG. 6 presents a circuit diagram of an injection circuit according to an aspect of the invention;
FIG. 7 presents a circuit diagram of a power converter including an injection circuit inductively coupled to one of the converter paths, according to yet another embodiment;
FIG. 8 presents a circuit diagram of an injection circuit coupled to a power converter according to another aspect of the invention;
FIG. 9 presents a flow diagram of a method for operating a power converter according to an embodiment;
FIG. 10 presents a side view of part of a power converter according to another embodiment;
FIG. 11 presents a plan view of the part of the power converter depicted in FIG. 10
FIG. 12 presents an isometric view of the part of the power converter depicted in FIG. 10 and FIG. 11; and
FIG. 13 presents an isometric view of an exemplary power converter with 6 converter paths according to an embodiment.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The disclosed concepts relate to a power converter comprising a plurality of converter paths that are connected in a circular manner. More specifically, each converter path comprises an input node, a first winding, a second winding, and an output node, connected such that each first winding provided in series between the input node and the second winding of the same converter path, and the second winding is provided in series between the first winding and the output node of the same converter path. Each converter path is configured to conduct current in a same direction between the input node and the output node. In addition, each first winding of the converter paths is inductively coupled to a second winding of a different converter path to form a respective transformer. As each converter path conducts current in a same direction, a DC flux induced in the first winding of each converter path is cancelled/compensated by the current flowing through the second winding coupled to the respective first winding. Equally, a DC flux induced in the second winding of each converter path is cancelled/compensated by the current flowing through the first winding coupled to the respective second winding.

Accordingly, the proposed power converter provides a magnetic structure that may exhibit improved transient response and power density when powering a high current load (e.g., a digital load).

In other words, the power converter comprises a plurality of paths including an input node (which may be connected to a respective phase input), a magnetic element including a first winding (connected between the input node and an intermediate node) and a second winding connected between the intermediate node and an output node. Each magnetic element does not have a steady-state DC magnetic flux. Each magnetic element instead has an AC flux that depends on a frequency of the phase inputs connected to the input nodes, and an output voltage connected to the output node. The first windings are inductively coupled to second windings of other paths thus forming a plurality of transformers, such that each path is connected to each other via the inductive coupling of the transformers.

As a result, the proposed power converter structure enables zero bias magnetic flux in all transformer cores. In addition, as all converter paths from input nodes to output nodes may comprise equivalent windings, a DCR resistance of each converter path from input node to output node may have a similar DCR resistance. Indeed, this is also facilitated by the circular structure, which enables the length of each converter path to be a similar length without increasing an overall spatial footprint of the power converter.

To best understand the invention, it is useful to appreciate the operation of a trans-inductor voltage regulator (TLVR) as well as a zero bias TLVR. In contrast to a conventional multi-phase converter, in a TLVR a load jump leading to an increase of the equivalent duty cycle in one phase (and hence to an increase of current in this phase) results in an increase of output current in all phases. This inherent feature of the TLVR allows a much faster transient response corresponding to a significantly lower effective output inductance of the system.

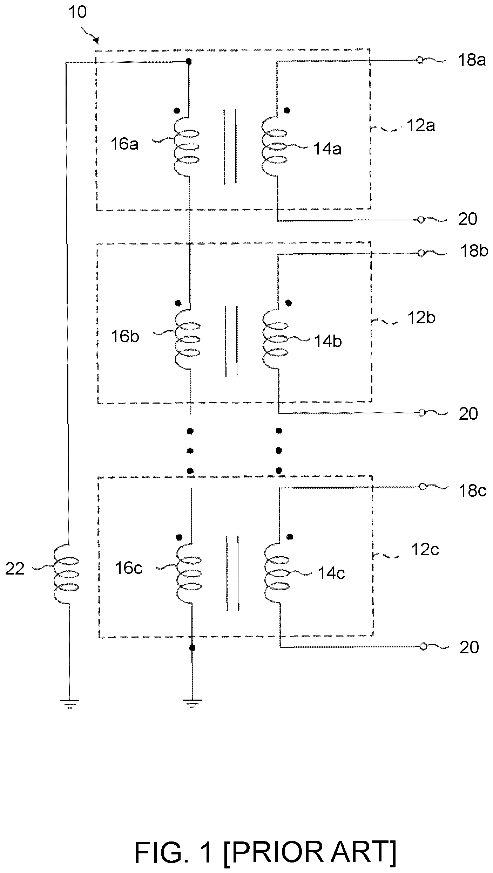

More specifically, Fig. 1 is a circuit diagram of an example TLVR 10. As shown, the TLVR 10 comprises a plurality of transformers 12a-c. Each transformer 12a-c comprises a first winding 14a-c on first side of the TLVR 10, and a second winding 16a-c on a second side of the TLVR 10. Each of the first windings 14a-c is provided between a respective input node 18a-c (connected to a respective phase input) and a common output node 20. That is, the first windings 14a-c are each connected to a different phase input, but are connected to a common output. Each of the second windings 16a-c is connected/provided in series with the others, and collectively they are referenced to ground. This series connection between ground is commonly known as the TLVR line, and may further comprise a transient inductor 22.

Accordingly, the TLVR 10 delivers power from an input voltage supplied in multiple phases, to a common output 20 that may be considered a point-of-load. Rather than using uncoupled individual windings connected to each phase input (as in traditional voltage regulators), each phase input is input to a transformer 12a-c.

When there is a load jump (i.e. an increase in the current/power required by the load), a pulse width modulation (PWM) duty cycle associated with one or more of the phase inputs (i.e. of the one or more switches connected to the input node 18a-c) may be increased. For TLVR 10, as all of the phases are indirectly connected by the second windings 16a-c provided in series, an increase in current provided in one phase input leads to an increase of output current in all phases. This feature of the TLVR 10 allows a faster transient response corresponding to a significantly lower effective output inductance of the system.

In order to overcome issues in terms of power density of the TLVR 10, there has also been proposed a zero-bias TLVR. In contrast to the TLVR 10 disclosed in FIG. 1, each of the second windings 16a-cconnected in series are not connected between an equipotential (e.g., ground). Instead, one end of the series connected second windings 16-1a-c is connected to a phase input, and opposite end of the series connected second windings 16a-c is connected to the common output node 20. In other words, the TLVR line is not referenced to ground, but is instead provided between a phase input, and the common output node 20. As a result, a required core area for each of the transformers 12a-c is reduced.

Nonetheless, problems arise with the zero-bias TLVR when several phases are provided in parallel. This is, with the provision of each further phase input, a further first winding is required, and thus another second winding in the TLVR path. Thus, with each further phase input, there is an increase of resistance in the TLVR line, which also now carries active energy to the load (in contrast to the standard TLVR 10). Inherently, such a limitation does not allow exploitation of the DC bias cancellation benefit when a large number of phases are needed, and moreover would intrinsically limit the bandwidth of the zero-bias TLVR.

To summarize, whilst existing TLVRs provide improved transient response compared to standard multi-phase converters, they are limited in terms of power density. By connecting a phase input to the TLVR line to provide a zero-bias TLVR, a power density can be improved by reduction of required transformer core area. However, this setup is limited in the number of phases that may be coupled before resistive loses become prohibitive.

Accordingly, a novel power converter is disclosed which may overcome one or more of the above described problems. By providing a plurality of transformers connected in series, with each transformer having windings exposed to current from two different converter paths (with each current having a different direction) thereby cancelling DC flux, a power converter with good transient response and power density may be realised. In essence, such a power converter does not require a single TLVR path that may experience high resistive losses. Instead, DCR resistance is balanced across the converter. Further, as each transformer does not experience a DC flux, a core of each transformer may be smaller.

Indeed, from one perspective, the proposed power converter provides a circular multi-phase magnetic structure where all the connected input phases are effectively electrically coupled, similarly to a zero-bias TLVR, but without sharing a common winding among all the phases.

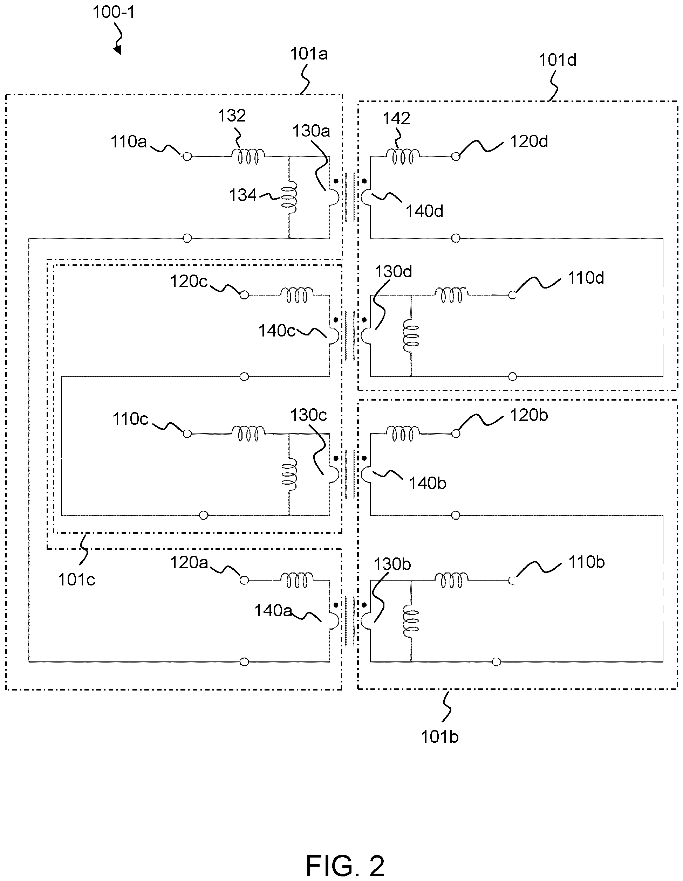

FIG. 2 presents a circuit diagram of such a power converter 100-1 according to an embodiment.

As shown, the power converter 100-1 comprises a plurality of converter paths 101a-d. Each converter path 101a-d comprises an input node 110a-d, an output node 120a-d, a first winding 130a-d, and a second winding 140a-d. The first winding 130a-d of each converter path 101a-d is connected in series between the input node 110a-d and the second winding 140a-d of the respective converter path. The second winding 140a-d of each converter path 101a-d is connected in series between the first winding 130a-d and the output node 120a-d of the respective converter path101a-d.

Each converter path 101a-d is configured to conduct current in a same direction between the input node 110a-d and the output node 120a-d. That is, all of the converter paths 101a-d conduct current from their respective input node 110a-d to their respective output node 120a-d, or all of the converter paths 101a-d conduct current from their respective output node 120a-d to their respective input node 110a-d.

Every first winding 130a-d is inductively coupled to a second winding 140a-d of a different converter path101a-d. That is, it is never the case that the first winding 130a-d of a converter path 101a-d is inductively coupled to the second winding 140a-d of the same converter path101a-d. Thus, each first winding 130a-d of the converter paths 101a-d is inductively coupled to a second winding 140a-d of a different converter path 101a-d to form a respective transformer. As a result, each transformer is connected to each other transformer in a series loop (at least indirectly via another transformer).

For example, a first winding 130a of a first converter path 101a may be inductively coupled to a second winding 140b of a second converter path 101b forming a first transformer coupling the first converter path 101a to the second converter path 101b, a first winding 130b the second converter path 101b may be inductively coupled to a second winding 140c of a third converter path 101c forming a second transformer coupling the second converter path 101b to the third converter path 101c, a first winding 130c of the third converter path 101c may be inductively coupled to a second winding 140d of a fourth converter path 101d forming a third transformer coupling the third converter path 101c to the fourth converter path 101d, and a first winding 130d of the fourth converter path 101d may be inductively coupled to a second winding 140a of the first converter path 101a forming a fourth transformer coupling the fourth converter path 101d to the first converter path 101a.

Accordingly, in this example, each of the first to fourth converter paths 101a-d are connected in a series loop by the inductive coupling of the transformers. Of course, it is worth noting that there may be fewer converter paths (e.g., three converter paths), or more converter paths (e.g., five converter paths). In any case, the same principle applies with the first windings 130a-d inductively coupled to second windings 14a-d of a different converter path 101a-d to form a transformer, with each transformer being connected in a closed chain loop.

To be clear, each transformer depicted in FIG. 2 is presented in the form of its equivalent circuit. That is, each first winding 130a-d is shown with a primary leakage inductance 132, each second winding 140a-d is shown with a second leakage inductance 142, and a magnetizing inductance 134 of each transformer is shown in parallel with each first winding 130a-d.

In an embodiment, a magnetizing inductance 134 of each transformer is significantly higher than a leakage inductance 132 of the respective first winding 130a and a leakage inductance 142 of the second winding 140d. For example, the magnetizing inductance 134 of each transformer may be at least ten times greater than each leakage inductance 132, 142 of the respective transformer. Nonetheless, other ratios between the magnetizing inductance and leakage inductance are possible.

Furthermore, the first winding 130a-d and second winding pairs 140a-d corresponding to each transformer may include a same number of turns. In other words, each first winding 130a-d may be coupled to a second winding 140a-d having a same number of turns. Accordingly, a turns ratio of each of the transformers may be close to unity. Indeed, this will also mean that, for each converter path 101a-d, the first winding 130a-d and the second winding 140a-d belonging to the same converter path 101a-d will have a same number of turns. This may ensure that each converter path 101a-d has a similar direct current resistance.

Nevertheless, it should be noted that the turns ratio of each transformer may not be unity - for example when one of the converter paths 101a-d receives a different magnitude of current to the other converter paths 1-1a-d. That is, embodiments are not restricted to each of the windings having the same number of turns.

For instance, when one of the converter paths 101a receives a current of a smaller magnitude than the other converter paths 101b-d, then the first winding 130a and the second winding 140a of said converter path 101a may have a greater number of turns than the first windings 130b-d and the second windings 140b-d of the other converter paths 101b-d to ensure balanced operation of the power converter.

By way of simplified example, (for a power converter with four converter paths) given that three of the converter paths receive a 20A current and one of the converter paths receive a 10A current, the converter path receiving the 10A current may have a first winding and second winding with double the number of turns (e.g., 2 turns) compared to the first winding and second winding of the converter paths receiving the 20A currents. More generally, the number of turns of the first winding and second winding of each converter path multiplied by the current provided to the respective converter path will equal a constant, the constant being the same for each converter path.

Thus, in some embodiments, for each least one of the converter paths 101a-d, the first winding 130a-d and second winding 140a-d of the converter path 101a-d may include a first number of turns. And, for at least one other converter path 101a-d, the first winding 130a-d and second winding 140a-d of the converter path 101a-d may include a second number of turns different to the first number of turns.

An advantage of the power converter 100, is that the converter paths 101a-d may be similar and/or arranged in a circular manner. More specifically, each first winding 130a-d may be similar to each other first winding 130a-d, and each second winding 140a-d may be similar to each other second winding 140a-d. Furthermore, each of the converter paths 101a-d may have a similar length (e.g., the connections between the input node 110a-d, the first winding 130a-d, the second winding 140a-d, and the output node 120a-d of each converter path 101a-d may be a similar length). As a result, each of the converter paths 101a-d may have a substantially similar direct current resistance. This leads to improved balance of the converter, with a good transient response. Indeed, in contrast to the zero-bias TLVR described above, this may be the case no matter how many phases are provided.

Furthermore, as the current through the first winding 130a-d and the current through the second winding 140a-d of each transformer flow in different directions, a DC magnetic flux may be cancelled. Thus, from the perspective of each transformer, no steady state DC flux is provided to the transformer. This means that each transformer does not require a large core to accommodate such DC flux. Thus, a power density of the converter is improved.

The input node 110a-d of each of the converter paths 101a-d may be connected to respective phase inputs. When there is a load jump (i.e. an increase in the current/power required by a load connected to the output nodes), a duty cycle of the voltage provided by one or more of the phase inputs may be increased. As each of the converter paths 101a-d are linked, an increase in current provided in one phase input leads to an increase of output current of all converter paths 101a-d. To be clear, each of the output nodes 120a-d of the plurality of converter paths 101a-d may be connected to a common output node for connection to a load.

To be clear, each phase input may have different input voltage magnitudes and frequencies.

As a result of the proposed power converter structure, an AC magnetic flux through each transformer may only depend on a frequency of the voltage provided by each phase input, and on the voltage required by the load connected to the output nodes.

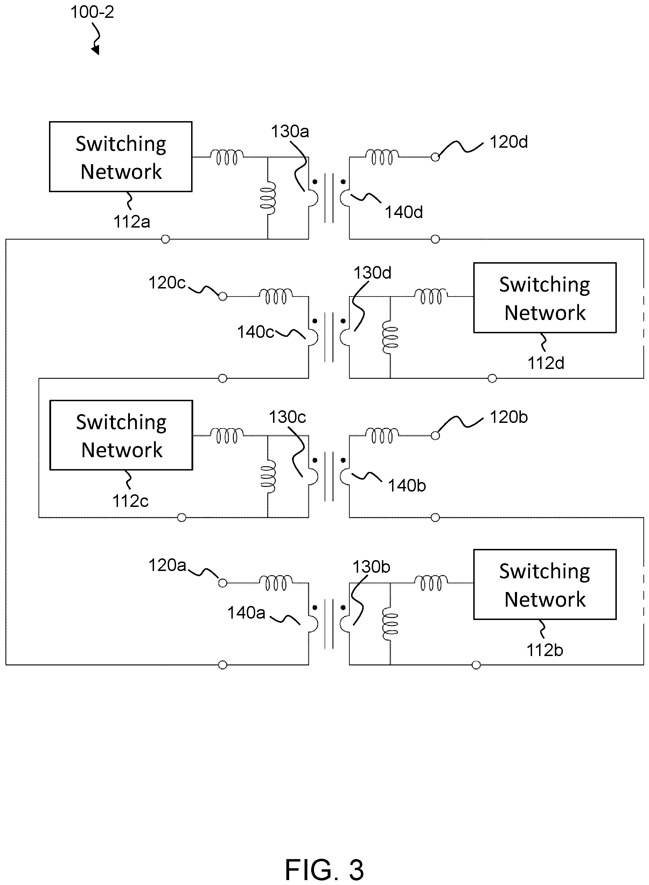

FIG. 3 presents a circuit diagram of a power converter 100-2 including a plurality of switching networks 112a-d, according to another embodiment. It will be observed that the different converter paths are not denoted by a dotted outline (for sake of clarity of the figure), but that the different converter paths are nevertheless present. In this case, the phase inputs provided to each of the input nodes 110a-d are provided by the respective switching networks 112a-d. The switching networks 112a-d may be driven by a controller to provide an appropriate AC voltage to each input node 110a-d.

In other words, each of the input nodes 110a-d of the converter paths are connected to respective switching networks 112a-d. Any switching network that can receive an input voltage, and provide an alternating output voltage may be employed.

Each switching network 112a-d may be identical, or may be dissimilar, depending on the application. Therefore, to be clear, each switching network 112a-d may be connected to a different input voltage, and may provide a phase input having different frequencies.

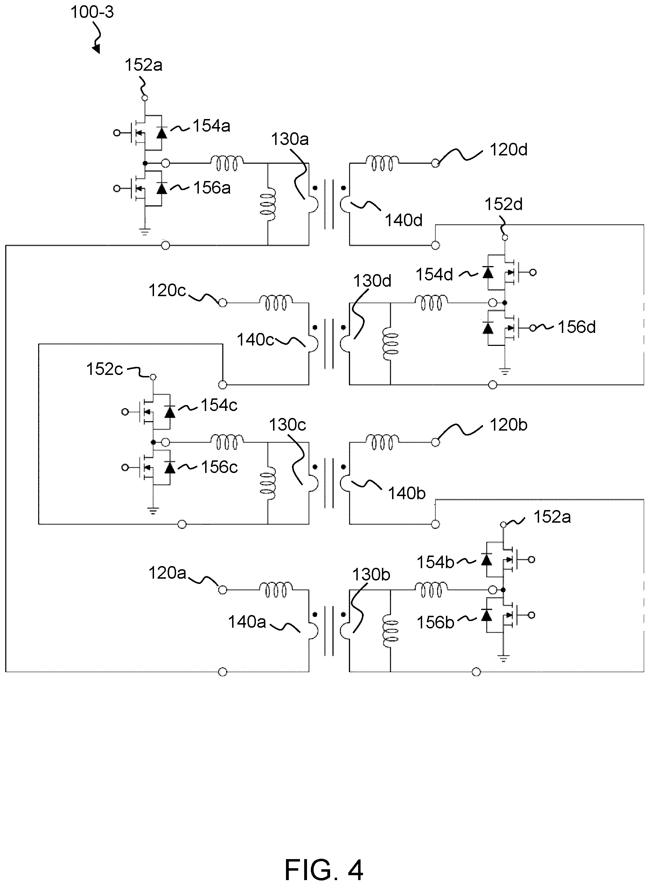

One exemplary embodiment of the power converter including switching networks is shown in FIG. 4, presenting a circuit diagram of a power converter 100-3 including a plurality of switching networks comprising buck converters.

More particularly, each switching network may comprise a high side switch 154a-d connected between a common input voltage 152a-d and the input node 110a-d of the respective converter path, and a low side switch 156a-d connected between the input node 110a-d of the respective converter path and a reference voltage. The reference voltage of each switching network may be ground as depicted, or may be a positive or negative reference potential.

The power converter 100-3 may therefore be implemented with classic buck converters connected to the respective input nodes 110a-d of each converter path. Each input node 110a-d is connected to a half-bridge between a DC input voltage and a reference potential (e.g., ground potential). This implementation may be particularly suited for when high current is needed for a low voltage load. This would enable zero-bias within each transformer during any load condition.

Moreover, to ensure high current slew rate and power converter scalability, an injection current may be provided to the power converter. This may be achieved in a few different ways.

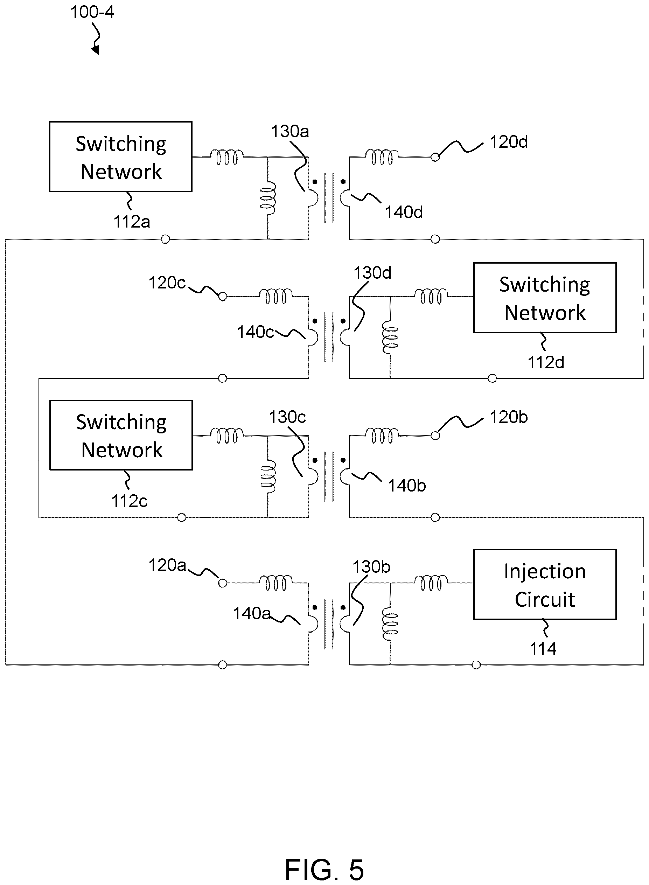

According to one embodiment, external injection may be provided to one or more of the input nodes 110a-d of the converter paths. That is, at least one of the input nodes 110a-d may not be connected to a phase input, but may be connected to an injection circuit 114. To demonstrate this, FIG. 5 is provided, which presents a circuit diagram of a power converter 100-4 including an injection circuit 114 connected to an input node 110b of one of the converter paths. Of course, it should be noted that an injection circuit 114 may be connected to more than one converter path.

In particular, the power converter 100-4 comprises converter paths in which at least one of the input nodes 110a-d is connected to a respective switching network 112a-d, and at least one of the other input nodes 110a-d are connected to a respective injection circuit 114.

Generally, the injection circuit 114 may comprise a magnetic component connected to the input node 110a-d, controlled by one or more further switching networks. The injection circuit 114 may therefore simply be a buck converter connected to the input node of the converter path via an inductor.

That is, the injection circuit 114 may comprise an inductor, a high side switch connected between an injection input voltage and a first terminal of the inductor, and a low side switch connected between the first terminal of the inductor and a reference voltage. The second terminal of the inductor may then be connected to the input node 110a-d of the respective converter path.

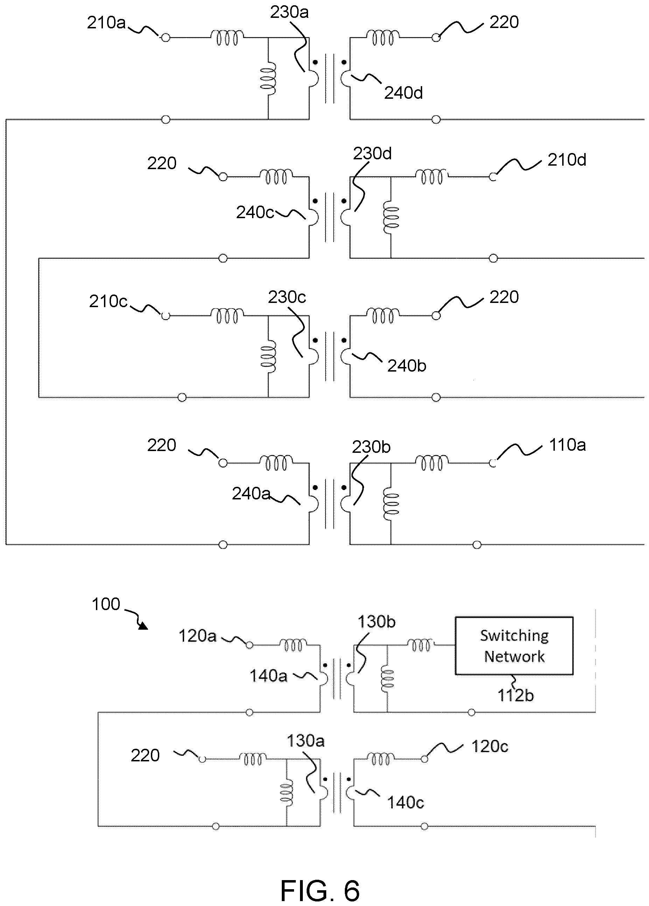

In a further example, the injection circuit 114 may be similar to the proposed power converter. That is, as shown in FIG. 6, the injection circuit 114 may comprise a plurality of injection converter paths, with each injection converter path comprising an input node 210a-d, an output node 220, a first winding 230a-d, and a second winding 240a-d.

Each first winding 230a-d of the injection converter paths may be connected in series between the input node 210a-d and the second winding 240a-d, and each second winding 240a-d of the injection converter paths may be connected in series between the first winding 230a-d and the output node 220-1. Like the proposed power converter, each injection converter path may be configured to conduct current in a same direction between the input node 210a-d and the output node 220-1, and each first winding 230a-d of the injection converter paths may be inductively coupled to a second winding 240a-d of a different injection converter path to form a respective, thereby connecting each transformer to each other transformer in a series loop.

Each of the input nodes 210a-d of the injection converter paths may be connected to respective injection phase inputs. The injection phase inputs may be provided by switching networks (e.g., by buck converters connected to the input nodes of the injection converter paths). Each output node 220-1 of the injection converter paths is connected to the input node 220-2 of the respective converter path, thus providing the external injection.

A smaller version of the power converter 100 is shown in FIG. 6 to illustrate the fact that the output nodes 220-1 of the injection circuit are connected to the input node 220-2 of one of the converter paths. The power converter may have more paths, as depicted in other figures.

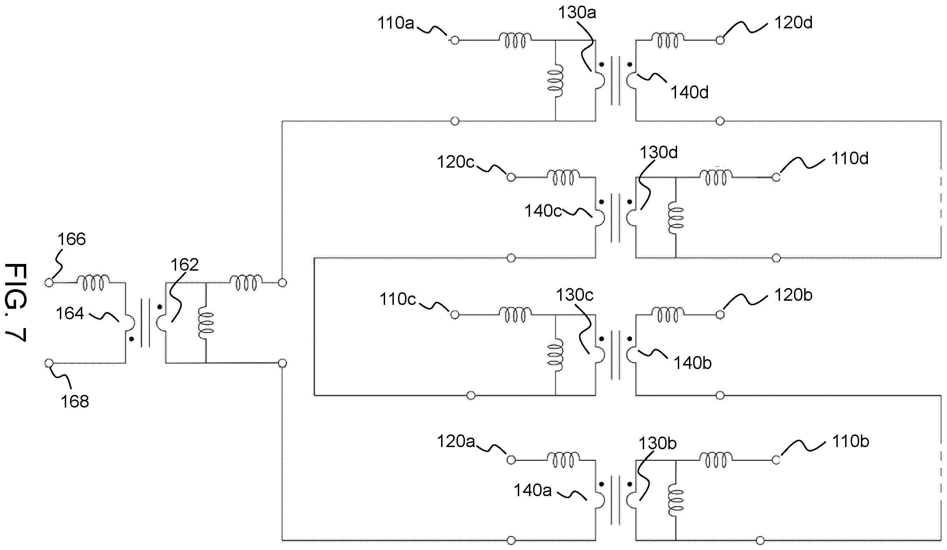

According to another embodiment, external injection may be provided to one or more of the converter paths via a transformer. That is, at least one of the converter paths may be coupled to an injection circuit via a transformer provided between the first winding and second winding of the converter path. To demonstrate this FIG. 7 is provided, which presents a circuit diagram of a power converter including an injection circuit coupled via a transformer to one of the converter paths. Of course, it should be noted that an injection circuit may be coupled to the more than one converter path.

More specifically, one of the plurality of converter paths further comprises a injection input winding 162 connected between the first winding 130a and the second winding 140a of the converter path.

The power converter further comprises a transformer injection path comprising an input node 166, an output node 168, and an injection output winding 164 connected between the input node 166 and the output node 168. The injection output winding 164 is inductively coupled to the injection input winding 162. Accordingly, the injection input winding 162 and injection output winding 164 form a transformer, via which external injection of current may be provided.

In some embodiments, the transformer injection path may comprise a first injection winding connected in series between the input node 166 and the injection output winding 164, and a second injection winding connected in series between the injection output winding 164 and the output node 168, wherein the input node 166 is connected to an injection phase input. As a result, current from the injection phase input may be injected into the converter path.

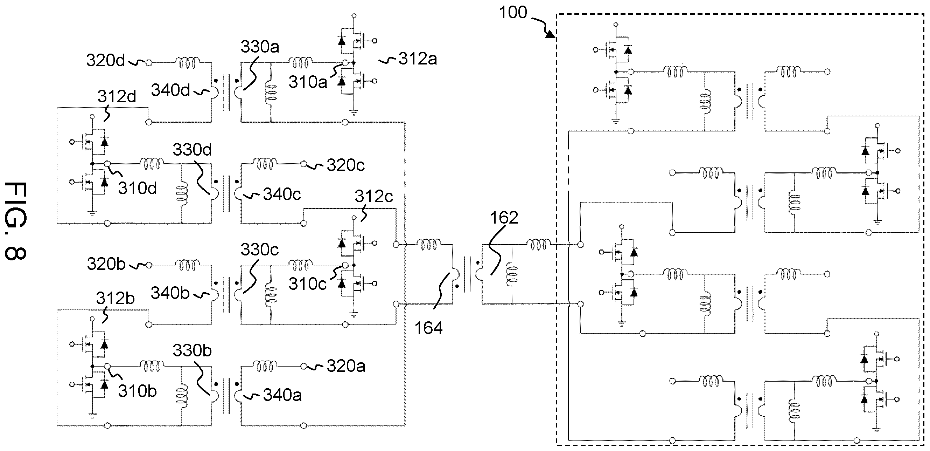

In another embodiment, the injection may be performed by a circuit similar to the proposed power converter. An example is depicted in FIG. 8, in which an injection circuit is coupled to the power converter 100 via the coupled input injection winding 162 and output injection winding 164. It is worth noting that the depicted power converter may be replaced by any power converter disclosed herein, with the input injection winding 162 provided between first and second windings of one of the converter paths.

More specifically, the power converter further comprises a plurality of transformer injection converter paths, with each transformer injection converter path comprising an input node 310a-d, an output node 320a-d, a first winding 330a-d, and a second winding 340a-d. Like before, the first winding 330a-d of each transformer injection converter path is connected in series between the input node 310a-d and the second winding 340a-d of the transformer injection converter path, and the second winding 340a-d of each transformer injection converter path is connected in series between the first winding 330a-d and the output node 320a-d of the transformer injection converter path.

Each transformer injection converter path is configured to conduct current in a same direction between the input node 310a-d and the output node 320a-d. Furthermore, each first winding 330a-d of the transformer injection converter paths may be inductively coupled to a second winding 340a-d of a different transformer injection converter path to form a respective transformer. As shown, each of the input nodes 310a-d of the transformer injection converter paths may be connected to respective injection phase inputs. The injection phase inputs may be provided by switching networks 312a-d (e.g., by buck converters connected to the input nodes 310a-d of the transformer injection converter paths).

Of course, one of the plurality of transformer injection converter paths further comprises the injection output winding 164 connected between the first winding 330c of the transformer injection converter path and the second winding 340c of the transformer injection converter path.

It is worth noting that whilst in the depicted example, each of the phase inputs and the injection phase inputs are provided by buck converters, any other switching network may be employed.

Furthermore, the output nodes 320a-d of each of the transformer injection converter paths may be connected to a same load as the output nodes of each of the converter paths. Alternatively, the output nodes 320a-d of each of the transformer injection converter paths may be connected to a different load.

To reiterate, the provision of the transformer injection converter paths coupled to the power converter via either a transformer coupled between first windings and second windings of a converter path, or to an input node of one of the converter paths, ensures high current slew rate.

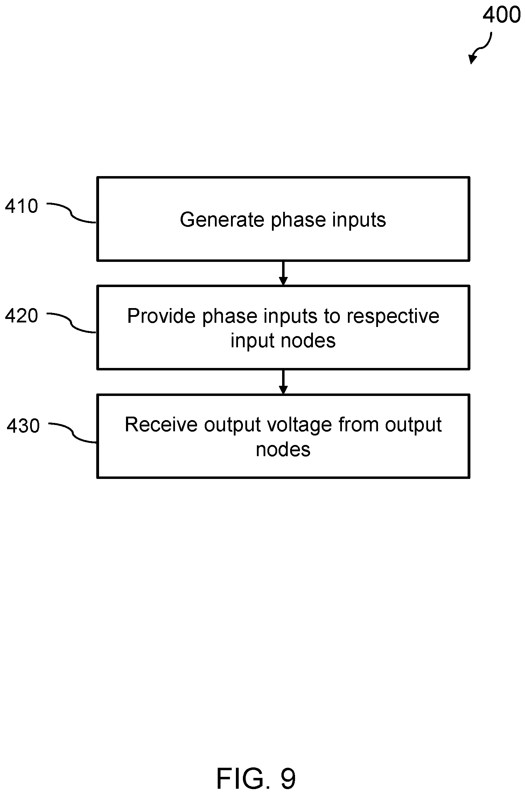

FIG. 9 presents a flow diagram of a method for operating a power converter according to an embodiment. The power converter may be any power converter as discussed herein, comprising a plurality of converter paths.

In step 410, a plurality of phase inputs are generated using an input voltage. That is, an input voltage is used to generate phase inputs. Each phase input may have a same frequency, with a phase offset. Alternatively, the phase inputs may have different frequencies and/or magnitudes. The phase inputs may be generated by any known means, such as by using buck converters.

In step 420, each phase input is provided to different respective input nodes of the converter paths. In other words, the generated phase inputs are provided to the converter paths via the input nodes. Each individual phase input may be provided to a different converter path.

In step 430, an output voltage is received from the output nodes of the converter paths. The output voltage may be received from a common output node formed by connecting each of the output nodes together. The output voltage may then be provided to a load. For example, the load may be a digital node, such as a microprocessor, an accelerator, etc.

Further disclosed concepts relate to a power converter comprising N converter paths (wherein N is an integer greater than 2), which are labelled as 1st to Nth converter paths. Each converter path amongst the 1st to Nth converter paths comprises a respective input node, an output node, a primary winding, and a secondary winding. The primary and secondary windings form a series circuit between the input node and the output node. Further, each converter path comprises a power stage configured to provide power to the input node. The primary winding of the Kth converter path (wherein K is an integer greater than 1 and less than N) is coupled to the secondary winding of the (K-1)th converter path and the secondary winding of the Kth converter path is coupled to the primary winding of the (K+1)th converter path,

In other words, a physical structure comprising N (i.e., at least 3) converter paths is defined. At least one of the converter paths (i.e. the Kth converter path) is coupled to a neighboring converter path (i.e., the (K-1)th converter path) by virtue of the Kth primary winding being coupled to the (K-1)th secondary winding. The same converter path (i.e., the Kth converter path) is coupled to a different neighboring converter path (i.e., the (K+1)th converter path) by virtue of the Kth secondary winding being coupled to the (K+1)th primary winding.

Of course, each of the converter paths may be linked/coupled in a circular arrangement in this manner, with the 1^{st} and Nth converter paths coupled via the primary winding of the 1^{st} converter path coupled to the secondary winding of the Nth converter path.

Put another way, the primary winding of the 1st converter path may be coupled to the secondary winding of the Nth converter path and the secondary winding of the 1st converter path may be coupled to a primary winding of the 2nd converter path. Similarly, the primary winding of the Nth converter path may be coupled to the secondary winding of the (N-1)th converter path and the secondary winding of the Nth converter path may be coupled to a primary winding of the 1st converter path. Meanwhile, for each of i=2 to N-1 (i.e., for each of the 2nd converter path to the (N-1)th converter path), the primary winding of the ith converter path may be coupled to the secondary winding of the (i-1)th converter path and the secondary winding of the ith converter path may be coupled to the primary winding of the (i+1)th converter path.

As a result, each of the converter paths may be linked together in a loop, with each converter path linked to its two neighbors via its primary winding and secondary winding. Thus, the converter paths may be physically provided in a circular manner. This may be particularly advantageous when providing a thin structure, as multiple overlapping layers are not required.

Indeed, this advantage is highlighted when considering the zero-bias TLVR described above. The zero-bias TLVR requires a TLVR line having a plurality of windings, each of which are coupled to different windings of each converter path. This structure requires the TLVR line to be layered on each converter path, increasing thickness of the structure (as well as having the disadvantage of an unbalanced DCR resistance and presence of a DC current through the windings, in contrast to the present invention, as described above). As a result, the proposed power converter enables a physical structure that may be flatter than a zero-bias TLVR.

Furthermore, as the converter paths may be arranged in a circular manner, the length of each conductor forming each respective converter path may be substantially the same or similar length (i.e., a same length of path connecting the input node and output node). Accordingly, each converter path may have a substantially similar direct current resistance. This leads to improved balance of the converter, with a good transient response. In contrast to the zero-bias TLVR described above, this may be the case no matter how many phases are provided.

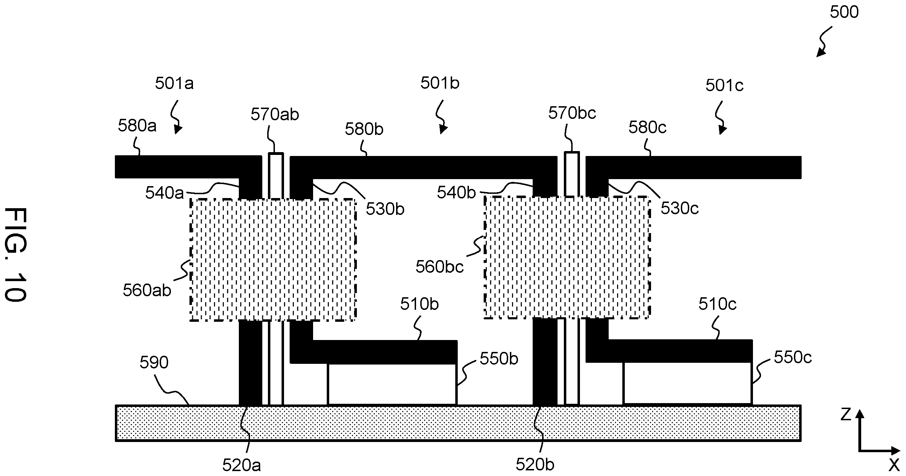

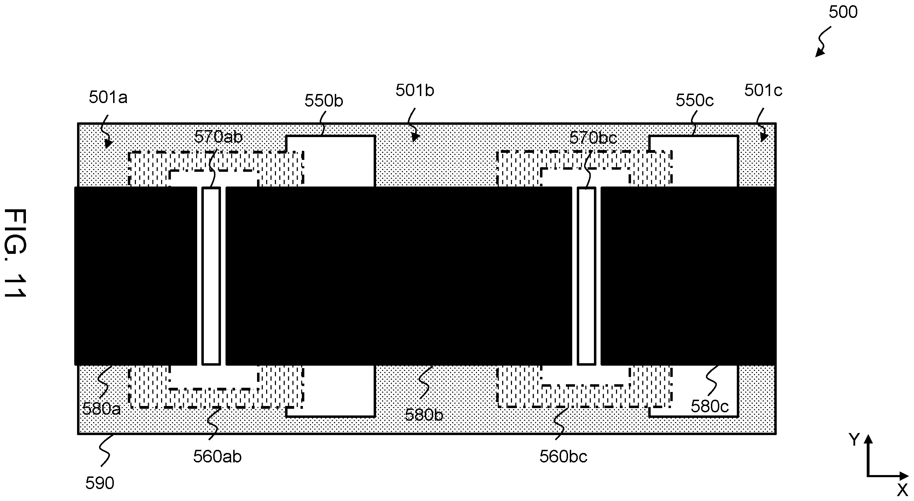

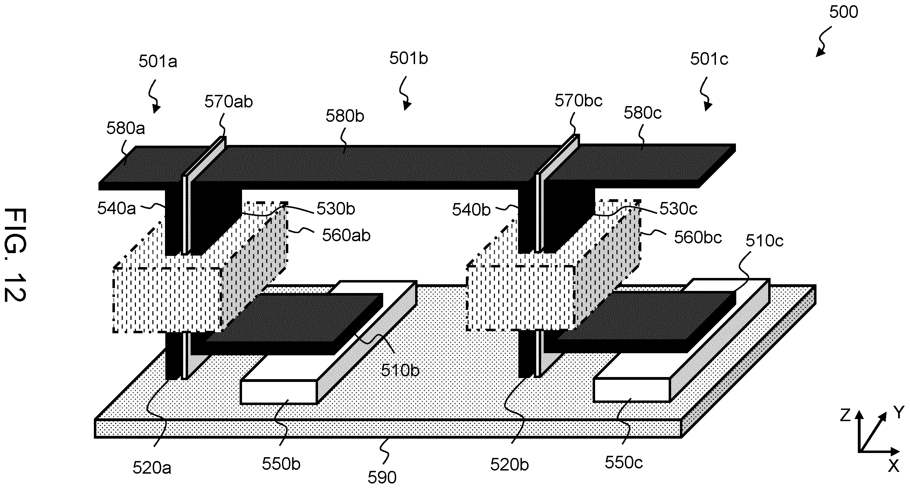

FIG. 10 presents a side view of part of a power converter 500 according to this embodiment. FIG. 11 presents a plan view of this part of the power converter 500, whilst FIG. 12 presents an isometric view of this part of the power converter 500.

To be clear, these figures focus on the Kth converter path 501b and its connection to neighbouring converter paths 501a, 501b provided on a substrate 590. Therefore, each of these figures only show a part of the power converter that corresponds to the Kth converter path 501b, the part of the (K-1)th converter path 501a coupled to the Kth converter path 501b, and the part of the (K+1)th converter path 501c coupled to the Kth converter path 501b. As such, the input node, primary winding and power stage of the (K-1)th converter path 501a are not shown, and the output node and secondary winding of the (K+1)th converter path 501c are not shown.

As shown, the Kth converter path 501b comprises an input node 510b, a primary winding 530b, a secondary winding 540b, and an output node 520b. A power stage 550b configured to provide power to the input node 510b is also provided.

In this example, the primary winding 530b and secondary winding 540b of the Kth converter path 501a are formed of a conductor, which electrically connects the input node 510b to the output node 520b. The primary winding 540b and the secondary winding 540b thus are provided in the form of a series circuit connecting the input node 510b to the output node 520b.

The Kth converter path 501b also comprises a connecting portion 580b that connects the primary winding 530b to the secondary winding 540b. In this example, the primary winding 530b is a conductive bar which extends in a vertical direction (i.e., Z direction). The secondary winding 540b is also a conductive bar which extends in the vertical direction (i.e., Z direction). Thus, the conductive bar of the primary winding 530b and the conductive bar of the secondary winding 540b extend in a first direction (a vertical or Z direction in this example). The connecting portion 580b may also be a conductive bar that extends in a horizontal direction (i.e., X direction), which is perpendicular to the vertical direction (i.e, Z direction). This conductive bar of the connecting portion 580b thus connects the conductive bar of the primary winding 530b to the conductive bar of the secondary winding 540b, therefore facilitating an electrical connection between the input node 510b to the output node 520b.

As also shown, the Kth converter path 501b may also comprise an auxiliary connecting portion providing the connection for the input node 510b. The auxiliary connecting portion may be a conductive bar which extends in a horizontal direction (i.e., X direction), which is perpendicular to the vertical direction (i.e, Z direction). As shown, this horizontal direction may be the same as the direction that the connecting portion 580b extends in, or may be another direction (e.g., a Y direction).

To be clear, by "extending in a direction", it is meant that a major axis of the bar extends in the direction. Thus, this definition does not exclude the bar also extending in directions perpendicular to the defined direction.

As a result, the Kth converter path 501b is provided in a small loop of connected conductive bars that provide a conductive path from the input node 510b to the output node 520b. Of course, other formats may also perform the same function, and therefore this precise layout of the elements of the Kth converter path 501b are not considered limiting.

In an embodiment, the conductive bars of the primary winding 530b, secondary winding 540b, connecting portion 580b, and auxiliary connecting portion may be formed of any conducting material. In a preferred embodiment, the conductive bars of the primary winding 530b, secondary winding 540b, connecting portion 580b, and auxiliary connecting portion may be formed of copper. That is, these elements may be copper bars.

The power stage 550b of the Kth converter path 501b comprises a first interface configured to receive power and a second interface being coupled to the input node 510b. The power stage 550b may be configured to provide a phase input voltage to the input node 510b. To this end, the power stage 550b may be a classic buck converter.

Furthermore, whilst not shown, the output node 520b may be electrically coupled to output nodes of other converter paths. These output nodes may then be connected to a load.

As can also be seen, the primary winding 530b of the Kth converter path 501b is coupled to the secondary winding 540a of the (K-1)th converter path 501a. That is, the primary winding 530b is inductively coupled to the secondary winding 540a, such that a transformer is created linking the Kth converter path 501b to the (K-1)th converter path 501a.

In addition, the secondary winding 540b of the Kth converter path 501b is coupled to the primary winding 530c of the (K+1)th converter path 501c. That is, the secondary winding 540b is inductively coupled to the primary winding 530c, such that a transformer is created linking the Kth converter path 501b to the (K+1)th converter path 501c.

To this end, and as shown, at least part of a face of the conductive bar forming the primary winding 530b of the Kth converter path 501b and at least part of a face of the conductive bar forming the secondary winding 540a of the (K-1)th converter path 501a are arranged in parallel with a gap 570ab separating the faces. In other words, the primary winding 530b has a face that is provided in parallel with the secondary winding 540a.

Similarly, at least part of a face of the conductive bar forming the secondary winding 540b of the Kth converter path 501b and at least part of a face of the conductive bar forming the primary winding 530c of the (K+1)th converter path 501c are arranged in parallel with a gap 570bc separating the faces. In other words, the secondary winding 540b has a face that is provided in parallel with the secondary winding 530c.

In some embodiments, the gap 570ab separating the faces of the primary winding 530b and the secondary winding 540a may be occupied or filled by a dielectric material. In some embodiments, the gap 570ab may be occupied or filled by a material with dielectric permittivity close to that of air. The material may be selected so as to improve coupling between the primary winding 530b and the secondary winding 540a or may simply be provided to ensure stability of the gap (i.e., so that the primary winding 530b and the secondary winding 540a do not touch even under the application of pressure).

Likewise, the gap 570bc separating the faces of the secondary winding 540b and the primary winding 530c may be occupied or filled by a dielectric material. In some embodiments, the gap 570bc may be occupied or filled by a material with dielectric permittivity close to that of air. The material may be selected so as to improve coupling between the secondary winding 540b and the primary winding 530c or may simply be provided to ensure stability of the gap (i.e., so that the secondary winding 540b and the primary winding 530c do not touch even under the application of pressure).

In addition, the each of the primary windings and secondary windings may penetrate through a layer of magnetically permeable material. For example, the primary winding 530b and the secondary winding 540a penetrate through a first layer 560ab of magnetically permeable material, and the secondary winding 540b and the primary winding 530c penetrate through a second layer 560bc of magnetically permeable material. Each of the layers of magnetically permeable material may be the same layer of magnetically permeable material (e.g., a continuous layer of magnetically permeable material, interspersed with penetrating first and second windings). Alternatively, each layer may be separate from the other layers of magnetically permeable material.

A load current flowing through each primary winding flows in a first direction (e.g., a +Z direction), and a load current flowing through each secondary winding flows in a second direction substantially opposite the first direction (e.g., a -Z direction). For example, a load current flowing through the conductive bar of the primary winding 530b of the Kth converter path 501b flows in a +Z (i.e., upward) direction, and a load current flowing through the conductive bar of the secondary winding 540a of the (K-1)th converter path 501a flows in -Z (i.e., downward) direction. Similarly, a load current flowing through the conductive bar of the secondary winding 540b of the Kth converter path 501b flows in a - Z (i.e., downward) direction, and a load current flowing through the conductive bar of the primary winding 530c of the (K+1)th converter path 501c flows in +Z (i.e., upward) direction

As a result of the current flowing in different directions in each resulting transformer, a DC magnetic flux may be cancelled. Thus, from the perspective of each transformer (i.e., each primary winding, secondary winding coupled pair), no steady state DC flux is provided to the transformer. This means that each transformer does not require a large core to accommodate such DC flux. Thus, a power density of the converter is improved.

In other words, as each converter path conducts current in a same direction from an input node to an output node, a DC flux induced in the primary winding of each converter path is cancelled/compensated by the current flowing through the secondary winding coupled to the respective primary winding. Equally, a DC flux induced in the secondary winding of each converter path is cancelled/compensated by the current flowing through the first winding coupled to the respective second winding.

To this point, only the part of the power converter including the Kth converter path 501b, its two nearest neighbours - the (K-1)th converter path 501a and the (K+1)th converter path 501c - and the connections therebetween have been described. It should be noted that the secondary winding of the (K+1)th converter path 501c may be coupled to the primary winding of the (K-1)th converter path 501a (similarly to how the primary winding 530b and the secondary winding 540a are coupled, or the secondary winding 540b and the primary winding 530c are coupled), thereby providing a power converter with three converter paths connected in a circular manner. Nevertheless, the power converter may have many more converter paths, which may also be linked in a loop.

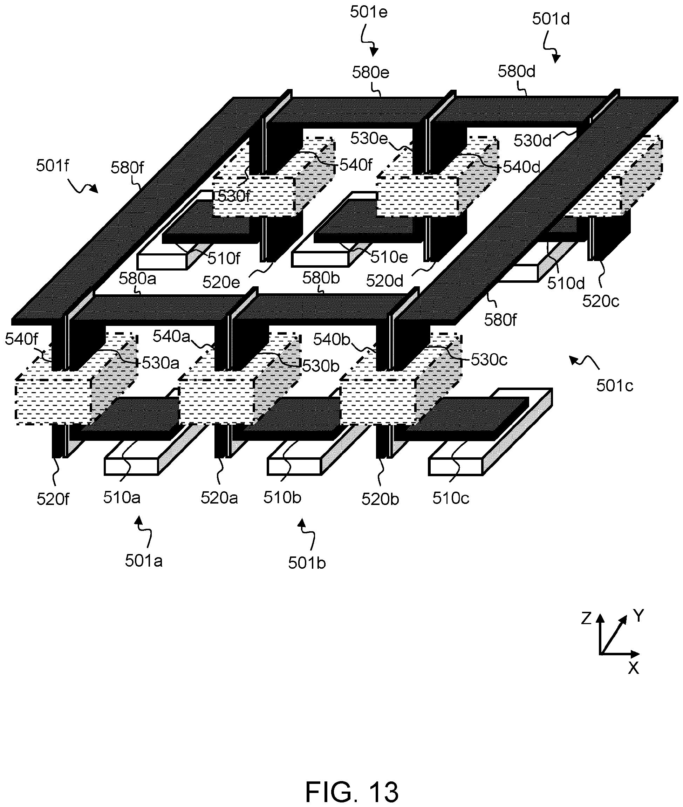

This is demonstrated by way of example in FIG. 13, which presents an isometric view of an exemplary power converter with 6 converter paths. Much repeated description is omitted here for sake of brevity and to avoid excessive labelling of the figure. Nevertheless, the same teachings may be applied to the power converter of FIG. 13 that are outlined in reference to FIGS. 10-12.

As shown, there is provided first converter path 501a, second converter path 501b, third converter path 501c, fourth converter path 501d, fifth converter path 501e, and sixth converter path 501f. Of course, this should not be considered limiting, as there may be fewer converter paths (but greater than two converter paths) or a greater number of converter paths.

The primary winding 530a of the first converter path 501a is coupled to the secondary winding 540f of the sixth converter path 501f. The secondary winding 540a of the first converter path 501a is coupled to the primary winding 530b of the second converter path. The primary winding 530b of the second converter path 501b is coupled to the secondary winding 540a of the first converter path 501a. The secondary winding 540b of the second converter path 501b is coupled to the primary winding 530c of the third converter path. The primary winding 530c of the third converter path 501c is coupled to the secondary winding 540b of the second converter path 501b. The secondary winding 540c of the third converter path 501c is coupled to the primary winding 530d of the fourth converter path. The primary winding 530d of the fourth converter path 501d is coupled to the secondary winding 540c of the third converter path 501c. The secondary winding 540d of the fourth converter path 501d is coupled to the primary winding 530e of the fifth converter path. The primary winding 530e of the fifth converter path 501e is coupled to the secondary winding 540d of the fourth converter path 501d. The secondary winding 540e of the fifth converter path 501e is coupled to the primary winding 530f of the sixth converter path. The primary winding 530f of the sixth converter path 501f is coupled to the secondary winding 540e of the fifth converter path 501e. The secondary winding 540f of the sixth converter path 501f is coupled to the primary winding 530a of the first converter path.

Accordingly, the converter paths are coupled in a series loop and may be arranged in a circular manner as shown in FIG. 13. To be clear, by a winding being coupled to another winding, it is meant that they are inductively coupled, thereby forming a transformer.

In more general terms, when there are N converter paths (with N being an integer greater than 3):
(i) the primary winding of the first converter path is coupled to the secondary winding of the Nth converter path and the secondary winding of the first converter path is coupled to a primary winding of the second converter path;
(ii) the primary winding of the Nth converter path is coupled to the secondary winding of the (N-1)th converter path and the secondary winding of the Nth converter path is coupled to a primary winding of the first converter path; and
(iii) for each of i=2 to N-1 (i.e., for each integer from 2 to N), the primary winding of the ith converter path is coupled to the secondary winding of the (i-1)th converter path and the secondary winding of the ith converter path is coupled to the primary winding of the (i+1)th converter path.

As shown, each of the primary windings 530a-f and each of the secondary windings 540a-f may extend through a layer of magnetically permeable material. In addition, a gap is provided between faces of the primary windings 530a-f and corresponding coupled secondary windings 540a-f. Although not depicted, each output node 510a-f may be connected together and coupled to a load.

Further, each converter path 501a-f comprises a respective power stage configured to provide power to the input node 510a-f of each respective converter path 510a-f. Each power stage may comprise a first interface configured to receive power, and a second interface being coupled to the input node 510a-f of the respective converter path 501a-f.

Moreover, each of the primary windings 530a-f and each of the secondary windings 540a-f are shown as conductive bars extending substantially in a vertical (Z) direction. The bar of each primary winding has a face which is arranged/positioned to be parallel to a face of the bar of the respective coupled secondary winding.

Furthermore, each converter path 501a-f comprises connecting portions 580a-f that connect the primary windings 530a-f to the secondary windings 540a-f of the respective converter paths 501a-f. Each connecting portion 580a-f is shown as a conductive bar which extends in a direction substantially perpendicular to the primary and secondary windings (e.g., a direction on the X-Y plane). Whilst depicted as different length, each of these connecting portions may comprise conductive bars of equal length, such that each path has a substantially similar resistance. This may help to improve the balance of the power converter.

This format may also ensure that the power converter has a small size in the Z dimension. For instance, in contrast to the zero-bias TLVR, the power converter may be flat as it does not require multiple layers of overlapping converter paths (necessary in a zero-bias TLVR due to the TLVR line which has windings coupled to windings of each converter path).

Although specific examples have been illustrated and described herein, it will be appreciated by those of ordinary skill in the art that a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following embodiments are disclosed:
1. A power converter comprising:
   a plurality of converter paths, each converter path comprising an input node, an output node, a first winding, and a second winding, wherein the first winding is connected in series between the input node and the second winding, and the second winding is connected in series between the first winding and the output node, wherein each converter path is configured to conduct current in a same direction between the input node and the output node;
   wherein each first winding of the converter paths is inductively coupled to a second winding of a different converter path to form a respective transformer.
2. The power converter of embodiment 1, wherein each of the input nodes of the converter paths are connected to respective phase inputs.
3. The power converter of embodiment 2, wherein each of the input nodes of the converter paths are connected to respective switching networks.
4. The power converter of embodiment 2, wherein at least one of the input nodes is connected to a respective switching network, and at least one of the other input nodes are connected to an injection circuit.
5. The power converter of embodiment 4, wherein the injection circuit comprises:
   a plurality of injection converter paths, each injection converter path comprising an input node, an output node, a first winding, and a second winding, wherein the first winding is connected in series between the input node and the second winding, and the second winding is connected in series between the first winding and the output node, wherein each injection converter path is configured to conduct current in a same direction between the input node and the output node,
   wherein each first winding of the injection converter paths is inductively coupled to a second winding of a different injection converter path to form a respective transformer,
   wherein each of the input nodes of the injection converter paths are connected to respective injection phase inputs, and
   wherein each output node of the injection converter paths is connected to the input node of the respective converter path.
6. The power converter of embodiment 4, wherein the injection circuit comprises:
   an inductor;
   a high side switch connected between an injection input voltage and a first terminal of the inductor; and
   a low side switch connected between the first terminal of the inductor and a reference voltage, wherein a second terminal of the inductor is connected to the input node of the respective converter path.
7. The power converter of any of embodiments 3-6, wherein each switching network comprises a high side switch connected between a common input voltage and the input node of the respective converter path, and a low side switch connected between the input node of the respective converter path and a reference voltage.
8. The power converter of any of embodiments 1-3, wherein one of the plurality of converter paths further comprises a injection input winding connected between the first winding and the second winding of the converter path, and wherein the power converter further comprises a transformer injection path comprising an input node, an output node, and an injection output winding connected between the input node and the output node, the injection output winding inductively coupled to the injection input winding.
9. The power converter of embodiment 8, wherein the transformer injection path comprises a first injection winding connected in series between the input node and the injection output winding, and a second injection winding connected in series between the injection output winding and the output node, wherein the input node is connected to an injection phase input.
10. The power converter of embodiment 8, further comprising:
   a plurality of transformer injection converter paths, each transformer injection converter path comprising an input node, an output node, a first winding, and a second winding, wherein the first winding is connected in series between the input node and the second winding, and the second winding is connected in series between the first winding and the output node, wherein each transformer injection converter path is configured to conduct current in a same direction between the input node and the output node;
   wherein each first winding of the transformer injection converter paths is inductively coupled to a second winding of a different transformer injection converter path to form a respective transformer,
   wherein one of the plurality of transformer injection converter paths further comprises the injection output winding connected between the first winding of the transformer injection converter path and the second winding of the transformer injection converter path.
11. The power converter of any of embodiments 1-10, wherein each of the output nodes of the plurality of converter paths are connected to a common output node for connection to a load.
12. The power converter of any of embodiments 1-11, wherein the first winding and second winding corresponding to each transformer include a same number of turns.
13. The power converter of embodiment 12, wherein each of the converter paths have a substantially similar direct current resistance.
14. The power converter of any of embodiments 1-11, wherein:
   for each least one of the converter paths, the first winding and second winding (120a-d) of the converter path include a first number of turns; and
   for at least one other converter path, the first winding and second winding (120a-d) of the converter path include a second number of turns different to the first number of turns.
15. The power converter of any of embodiments 1-14, wherein a magnetizing inductance of each transformer is at least ten times greater than a leakage inductance of the respective transformer.
16. The power converter of any of embodiments 1-14, wherein each transformer is connected to each other transformer in a series loop.
17. A method for operating the power converter of any of embodiments 1-16, comprising:
   generating a plurality of phase inputs using an input voltage;
   providing each phase input to different respective input nodes of the converter paths; and
   receiving an output voltage from the output nodes.
18. A power converter comprising:
   1st to Nth converter paths, each converter path comprising an input node, an output node, a primary winding, and a secondary winding, the primary and secondary windings forming a series circuit, each converter path comprising a power stage configured to provide power to the input node, wherein N is an integer greater than 2,
   wherein the primary winding of the Kth converter path is coupled to the secondary winding of the (K-1)th converter path and the secondary winding of the Kth converter path is coupled to the primary winding of the (K+1)th converter path, wherein K is an integer greater than 1 and less than N.
19. The power converter of embodiment 18, wherein the 1st to Nth converter paths are provided in a circular arrangement.
20. The power converter of embodiment 18 or 19, wherein:
   the primary winding of the 1st converter path is coupled to the secondary winding of the Nth converter path and the secondary winding of the 1st converter path is coupled to a primary winding of the 2nd converter path;
   the primary winding of the Nth converter path is coupled to the secondary winding of the (N-1)th converter path and the secondary winding of the Nth converter path is coupled to a primary winding of the 1st converter path;
   wherein, for each of i=2 to N-1, the primary winding of the ith converter path is coupled to the secondary winding of the (i-1)th converter path and the secondary winding of the ith converter path is coupled to the primary winding of the (i+1)th converter path.
21. The power converter of any of embodiments 18-20, wherein each of the primary and secondary windings penetrate through a layer of magnetically permeable material.
22. The power converter of any of embodiments 18-21, wherein each of the primary windings and each of the secondary windings comprise a conductive bar.
23. The power converter of embodiment 22, wherein the conductive bar of each of the primary windings and the conductive bar of each of the secondary windings are formed of copper.
24. The power converter of embodiment 21 or 22, wherein at least part of a face of the conductive bar forming the primary winding of the Kth converter path and at least part of a face of the conductive bar forming the secondary winding of the (K-1)th converter path are arranged in parallel with a gap separating the faces.
25. The power converter of embodiment 24, wherein a load current flowing through conductive bar of the primary winding of the Kth converter path flows in a first direction, and a load current flowing through the conductive bar of the secondary winding of the (K-1)th converter path flows in a second direction, wherein the first direction is substantially opposite the second direction.
26. The power converter of any of embodiments 21-25, wherein at least part of a face of the conductive bar forming the secondary winding of the Kth converter path and at least part of a face of the conductive bar forming the primary winding of the (K+1)th converter path are arranged in parallel with a gap separating the faces.
27. The power converter of embodiment 26, wherein a load current flowing through conductive bar of the secondary winding of the Kth converter path flows in a second direction, and a load current flowing through the conductive bar of the primary winding of the (K+1)th converter path flows in a first direction, wherein the first direction is substantially opposite the second direction.
28. The power converter of any of embodiments 24-27, wherein the gap separating the faces is occupied by a dielectric material.
29. The power converter of any of embodiments 22-28, wherein each the conductive bar of each of the primary windings and the conductive bar of each of the secondary windings extend in a first direction, and wherein each converter path comprises a connecting bar extending in a second direction perpendicular to the first direction, the connecting bar of each converter path connecting the conductive bar of the primary winding of the respective converter path and the conductive bar of the secondary winding of the respective converter path.
30. The power converter of any of embodiments 18-29, wherein the primary winding and seconding winding of each converter path are formed of a respective conductor connecting the respective input node to the respective output node.
31. The power converter of embodiment 30, wherein the power stage of each converter path comprises:
   a first interface configured to receive power; and
   a second interface being coupled to the conductor of the respective converter path.

## Claims

1. A power converter comprising:
a plurality of converter paths (101a-d), each converter path comprising an input node (110a-d), an output node (120a-d), a first winding (130a-d), and a second winding (140a-d), wherein the first winding is connected in series between the input node and the second winding, and the second winding is connected in series between the first winding and the output node, wherein each converter path is configured to conduct current in a same direction between the input node and the output node;
wherein each first winding of the converter paths is inductively coupled to a second winding of a different converter path to form a respective transformer.

2. The power converter of claim 1, wherein each of the input nodes (110a-d) of the converter paths (101a-d) are connected to respective phase inputs.

3. The power converter of claim 2, wherein each of the input nodes (110a-d) of the converter paths (101a-d) are connected to respective switching networks (112a-d).

4. The power converter of claim 2, wherein at least one of the input nodes (110a-d) is connected to a respective switching network (112a-d), and at least one of the other input nodes are connected to an injection circuit (114).

5. The power converter of claim 4, wherein the injection circuit comprises:
a plurality of injection converter paths, each injection converter path comprising an input node (210a-d), an output node (220a-d), a first winding (230a-d), and a second winding (240a-d), wherein the first winding is connected in series between the input node and the second winding, and the second winding is connected in series between the first winding and the output node, wherein each injection converter path is configured to conduct current in a same direction between the input node and the output node,
wherein each first winding of the injection converter paths is inductively coupled to a second winding of a different injection converter path to form a respective transformer,
wherein each of the input nodes of the injection converter paths are connected to respective injection phase inputs, and
wherein each output node of the injection converter paths is connected to the input node of the respective converter path.

6. The power converter of claim 4, wherein the injection circuit comprises:
an inductor;
a high side switch connected between an injection input voltage and a first terminal of the inductor; and
a low side switch connected between the first terminal of the inductor and a reference voltage, wherein a second terminal of the inductor is connected to the input node of the respective converter path.

7. The power converter of any of claims 3-6, wherein each switching network (112a-d) comprises a high side switch (154a-d) connected between a common input voltage (152a) and the input node (110a-d) of the respective converter path (101a-d), and a low side switch (156a-d) connected between the input node of the respective converter path and a reference voltage.

8. The power converter of any of claims 1-3, wherein one of the plurality of converter paths (101a-d) further comprises a injection input winding (162) connected between the first winding (130a) and the second winding (140a) of the converter path, and wherein the power converter further comprises a transformer injection path comprising an input node (166), an output node (168), and an injection output winding (164) connected between the input node and the output node, the injection output winding inductively coupled to the injection input winding.

9. The power converter of claim 8, wherein the transformer injection path comprises a first injection winding connected in series between the input node (166) and the injection output winding (164), and a second injection winding connected in series between the injection output winding and the output node (168), wherein the input node is connected to an injection phase input.

10. The power converter of claim 8, further comprising:
a plurality of transformer injection converter paths, each transformer injection converter path comprising an input node (310a-d), an output node (320a-d), a first winding (330a-d), and a second winding (340a-d), wherein the first winding is connected in series between the input node and the second winding, and the second winding is connected in series between the first winding and the output node, wherein each transformer injection converter path is configured to conduct current in a same direction between the input node and the output node;
wherein each first winding of the transformer injection converter paths is inductively coupled to a second winding of a different transformer injection converter path to form a respective transformer,
wherein one of the plurality of transformer injection converter paths further comprises the injection output winding (164) connected between the first winding of the transformer injection converter path and the second winding of the transformer injection converter path.

11. The power converter of any of claims 1-10, wherein each of the output nodes (120a-d) of the plurality of converter paths (101a-d) are connected to a common output node for connection to a load.

12. The power converter of any of claims 1-11, wherein the first winding (130a-d) and second winding (140a-d) corresponding to each transformer include a same number of turns.

13. The power converter of claim 12, wherein each of the converter paths (101a-d) have a substantially similar direct current resistance.

14. The power converter of any of claims 1-11, wherein:
for each least one of the converter paths, the first winding (130a-d) and second winding (140a-d) of the converter path (101a-d) include a first number of turns; and
for at least one other converter path, the first winding and second winding of the converter path include a second number of turns different to the first number of turns.

15. The power converter of any of claims 1-14, wherein a magnetizing inductance of each transformer is at least ten times greater than a leakage inductance of the respective transformer.

16. The power converter of any of claims 1-15, wherein each transformer is connected to each other transformer in a series loop.

17. A method for operating the power converter of any of claims 1-16, comprising:
generating (410) a plurality of phase inputs using an input voltage;
providing (420) each phase input to different respective input nodes of the converter paths; and
receiving (430) an output voltage from the output nodes.

## Amended claims

### Amended claims in accordance with Rule 137(2) EPC.

1. A power converter comprising:
a plurality of converter paths (101a-d), each converter path comprising an input node (110a-d), an output node (120a-d), a first winding (130a-d), and a second winding (140a-d), wherein the first winding is connected in series between the input node and the second winding, and the second winding is connected in series between the first winding and the output node, wherein each converter path is configured to conduct current in a same direction between the input node and the output node;
wherein each first winding of the converter paths is inductively coupled to a second winding of a different converter path to form a respective transformer, and
wherein a magnetizing inductance of each transformer is at least ten times greater than a leakage inductance of the respective transformer.

2. The power converter of claim 1, wherein each of the input nodes (110a-d) of the converter paths (101a-d) are connected to respective phase inputs.

3. The power converter of claim 2, wherein each of the input nodes (110a-d) of the converter paths (101a-d) are connected to respective switching networks (112a-d).

4. The power converter of claim 2, wherein at least one of the input nodes (110a-d) is connected to a respective switching network (112a-d), and at least one of the other input nodes are connected to an injection circuit (114).

5. The power converter of claim 4, wherein the injection circuit comprises:
a plurality of injection converter paths, each injection converter path comprising an input node (210a-d), an output node (220a-d), a first winding (230a-d), and a second winding (240a-d), wherein the first winding is connected in series between the input node and the second winding, and the second winding is connected in series between the first winding and the output node, wherein each injection converter path is configured to conduct current in a same direction between the input node and the output node,
wherein each first winding of the injection converter paths is inductively coupled to a second winding of a different injection converter path to form a respective transformer,
wherein each of the input nodes of the injection converter paths are connected to respective injection phase inputs, and
wherein each output node of the injection converter paths is connected to the input node of the respective converter path.

6. The power converter of claim 4, wherein the injection circuit comprises:
an inductor;
a high side switch connected between an injection input voltage and a first terminal of the inductor; and
a low side switch connected between the first terminal of the inductor and a reference voltage, wherein a second terminal of the inductor is connected to the input node of the respective converter path.

7. The power converter of any of claims 3-6, wherein each switching network (112a-d) comprises a high side switch (154a-d) connected between a common input voltage (152a) and the input node (110a-d) of the respective converter path (101a-d), and a low side switch (156a-d) connected between the input node of the respective converter path and a reference voltage.

8. The power converter of any of claims 1-3, wherein one of the plurality of converter paths (101a-d) further comprises a injection input winding (162) connected between the first winding (130a) and the second winding (140a) of the converter path, and wherein the power converter further comprises a transformer injection path comprising an input node (166), an output node (168), and an injection output winding (164) connected between the input node and the output node, the injection output winding inductively coupled to the injection input winding.

9. The power converter of claim 8, wherein the transformer injection path comprises a first injection winding connected in series between the input node (166) and the injection output winding (164), and a second injection winding connected in series between the injection output winding and the output node (168), wherein the input node is connected to an injection phase input.

10. The power converter of claim 8, further comprising:
a plurality of transformer injection converter paths, each transformer injection converter path comprising an input node (310a-d), an output node (320a-d), a first winding (330a-d), and a second winding (340a-d), wherein the first winding is connected in series between the input node and the second winding, and the second winding is connected in series between the first winding and the output node, wherein each transformer injection converter path is configured to conduct current in a same direction between the input node and the output node;
wherein each first winding of the transformer injection converter paths is inductively coupled to a second winding of a different transformer injection converter path to form a respective transformer,
wherein one of the plurality of transformer injection converter paths further comprises the injection output winding (164) connected between the first winding of the transformer injection converter path and the second winding of the transformer injection converter path.

11. The power converter of any of claims 1-10, wherein each of the output nodes (120a-d) of the plurality of converter paths (101a-d) are connected to a common output node for connection to a load.

12. The power converter of any of claims 1-11, wherein the first winding (130a-d) and second winding (140a-d) corresponding to each transformer include a same number of turns.

13. The power converter of claim 12, wherein each of the converter paths (101a-d) have a substantially similar direct current resistance.

14. The power converter of any of claims 1-11, wherein:
for each least one of the converter paths, the first winding (130a-d) and second winding (140a-d) of the converter path (101a-d) include a first number of turns; and
for at least one other converter path, the first winding and second winding of the converter path include a second number of turns different to the first number of turns.

15. The power converter of any of claims 1-14, wherein each transformer is connected to each other transformer in a series loop.

16. A method for operating the power converter of any of claims 1-15, comprising:
generating (410) a plurality of phase inputs using an input voltage;
providing (420) each phase input to different respective input nodes of the converter paths; and
receiving (430) an output voltage from the output nodes.
